# EUROPEAN PATENT SPECIFICATION

(11) **EP 1 049 417 B1**
(45) Date of publication and mention of the grant of the patent: **27.07.2005**
(21) Application number: 98957408.2
(22) Date of filing: 28.10.1998
(51) Int. Cl.: A61C 7/00

(54) **COMPUTERIZED ORTHODONTIC APPLIANCE DISPENSER**
COMPUTERGESTÜTZTE ZAHNMEDIZINISCHE INSTRUMENTENSPENDER
DISTRIBUTEUR INFORMATISE D'APPAREILS ORTHODONTIQUES

(30) Priority: 30.10.1997 US 961092
(43) Date of publication of application: 08.11.2000
(73) Proprietor: Ortho-Tain Inc., Bayamon, Puerto Rico 00620 (US)
(72) Inventor: BERGERSEN, Earl, O., Winnetka, IL 60093 (US)
(74) Representative: Linnemann, Winfried
(86) International application number: PCT/US1998/022918
(87) International publication number: WO 1999/022664

(56) References cited:
- WO-A-94/10935
- US-A- 3 898 736
- US-A- 4 182 036
- US-A- 4 663 720
- US-A- 4 935 635
- US-A- 5 278 756
- US-A- 5 320 462
- US-A- 5 533 895
- US-A- 5 683 243

## Description

### BACKGROUND OF THE INVENTION

The present invention relates to an apparatus that diagnoses various orthodontic problems, recommends or denies treatment, and if appropriate, measures the sizes of the teeth and dispenses a treatment appliance with instructions to the patient.

In many parts of the world, orthodontic treatment to properly align malposed teeth is unavailable and if available requires a diagnosis by a qualified dentist, specially trained, in the field and usually is too costly for most individuals. Properly aligned teeth, however, are extremely important in preventing temporomandibular joint problems, gum disease, decay, as well as, looseness and loss of teeth.

Prefabricated tooth straightening appliances in various types and sizes invented by the inventor of this diagnostic and dispensing apparatus are capable of straightening teeth of the majority of malocclusions, if properly worn. These devices have been proven effective in correcting many types of tooth misalignment conditions especially in children from 6 years of age into adulthood. These devices have also significantly reduced the cost of providing orthodontic care, which traditionally requires many visits for adjustment of complicated hardware installed in the mouth of a patient.

One problem is that though these appliances are available and effective, they require a thorough diagnosis for the applicability to a certain malocclusion and to determine the proper sized appliance for a particular patient. Document US 5 278 756, for exemple, discloses an apparatus for diagnosing orthodontie condition of an individual and has been used as basis for the preamble of claim 1. In many parts of the world, no such diagnosis is available or even possible for the patient since there are few dental facilities available. Another problem is that in remote parts of the world, billing procedures and obtaining payment for a diagnosis and treatment may be difficult at best. An apparatus that can provide a comprehensive diagnosis, dispense the correct appliance when appropriate, with directions in the proper language, and be able to have an effective way for a patient to pay for the services and for the provider of the service to be compensated, would be advantageous.

The present invention is for apparatus of diagnosing and dispensing standardized orthodontic appliances as specified in claim 1.

The apparatus of the invention includes an outer protective housing having a user interface for receiving information from the user of the apparatus and for communicating information to the user. The apparatus also includes one or more digital cameras such as a charge compiled device or CCD camera, an ultra-high resolution type digital camera. CCD cameras are available from Panasonic Industries Camera Division, Chori America, Inc., Data Cell Image Manufacturing Co., JVC, Sony Electronics, and Eastman Kodak Co. Similarly, ultra-high resolution video equipment is available from Eastman Kodak, Data Cell, Toshiba America, and Carl Zeiss. These cameras can preferably move to obtain pictures of the face in two or more views and five intra-oral views of the teeth. Another less desirable method would be to have stationary cameras and have the patient change their position to obtain the proper views. The cameras take either moving digital views of the patient's face and mouth, or still digital views with similar information.

The digital information is processed in order to obtain information: the presence or absence of either deciduous or permanent teeth, the degree of crowding and displacements of the teeth, the condition of the gingival tissue, the angulation of the anterior and posterior teeth, presence of severe decay and loss of arch length, the size of all of the teeth based on the size of the upper and lower central incisors, overbite, overjet, open-bite, jaw relation, molar relation, spacing, presence of extra teeth, presence of cross-bite, midline alignment, gummy smile during high smile, face height, maximum jaw opening, amount of arch space present for degree of crowding, discoloration of anterior teeth, length of clinical crowns of incisors, and pattern of facial profile including the lips, nose, upper and lower jaw prognathism or recessiveness in relation to other facial structures.

The computer also asks the patient several questions regarding name, address, age, sex, height, height of older siblings and parents, and other pertinent family characteristics. The apparatus processes this information in one of two different ways. The first is where the computer portion proceeds through a logical sequence of decisions regarding the above data of the patients' facial and dental characteristics coupled with the age, sex, height and other family patterns to either reject or accept the patient as a viable candidate for the appliance. The second is for the computer to compare the various views of the digital images taken of the patient's face and mouth and compare these to hundreds of pictures of other patients' views showing stages of acceptance or rejection, which the computer can compare to. Each dimension has published levels of acceptance or rejection regarding the appliance use. In an orderly sequence, each characteristic is accepted or rejected until a final decision is made whether the patient is a viable candidate or not for the particular technique.

If the patient is accepted, the cameras measure the teeth and various sizes of appliances are tried on the computer images to determine the proper type of appliance and its size. The type of appliance is determined by which teeth are present in the mouth and the size depends on a measurement of the upper and/or lower permanent incisors. The appliance is automatically dispensed and specific directions for the patient are printed out as to the type of wear each day, how long the active treatment should last, how the same appliance should be worn to retain the correction, and for how long. There can be printed pictures of what the teeth should look like when the wear of the appliance can be slowed down in its wear, and finally discontinued. This information is coupled with the patient's age, the number of erupting permanent teeth during the wear of the appliance, and the severity of the malocclusion particularly as it applies to the initial overbite, overjet, and crowding severity.

### ON THE DRAWINGS:

FIG. 1 is a perspective view of an orthodontic appliance, which is utilized by the apparatus of the present invention.
FIG. 2 is a perspective view if an orthodontic diagnosis and appliance dispenser constructed in accordance with the present invention.
FIG. 3 is a simplified schematic diagram of the operation of the apparatus of the invention.

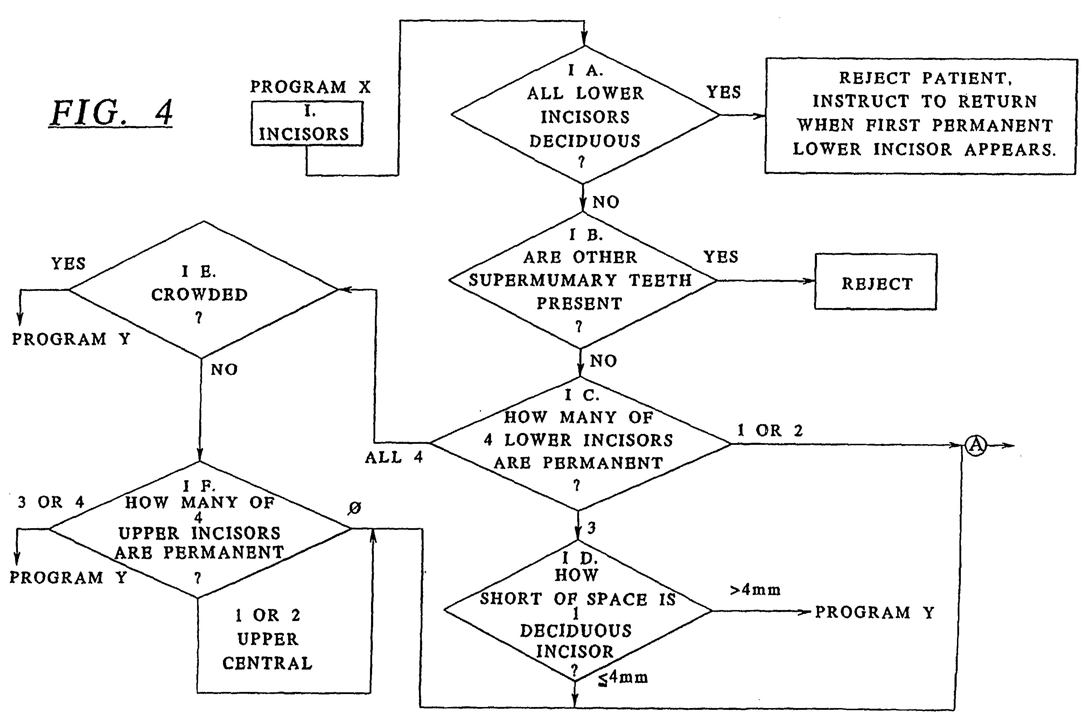

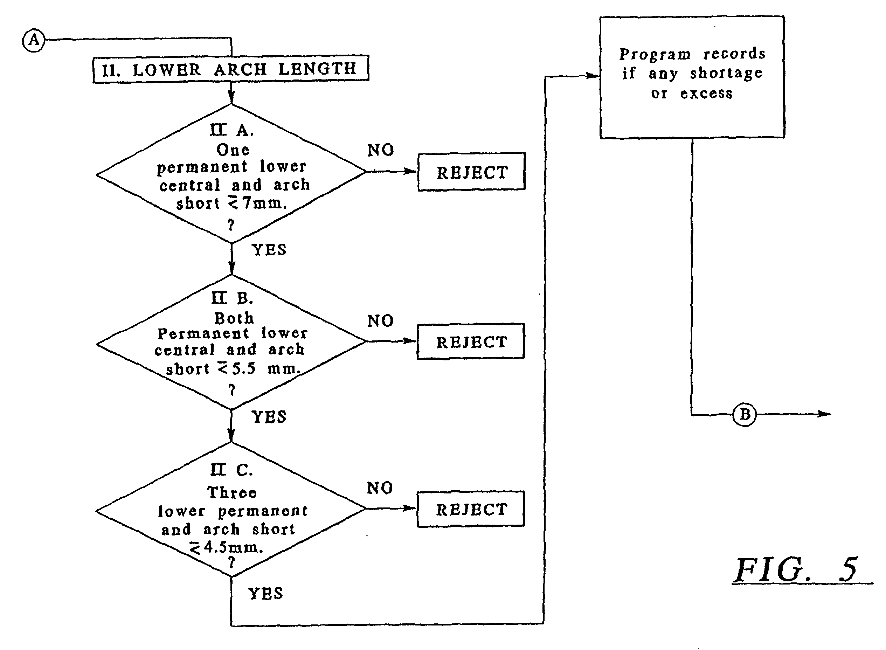

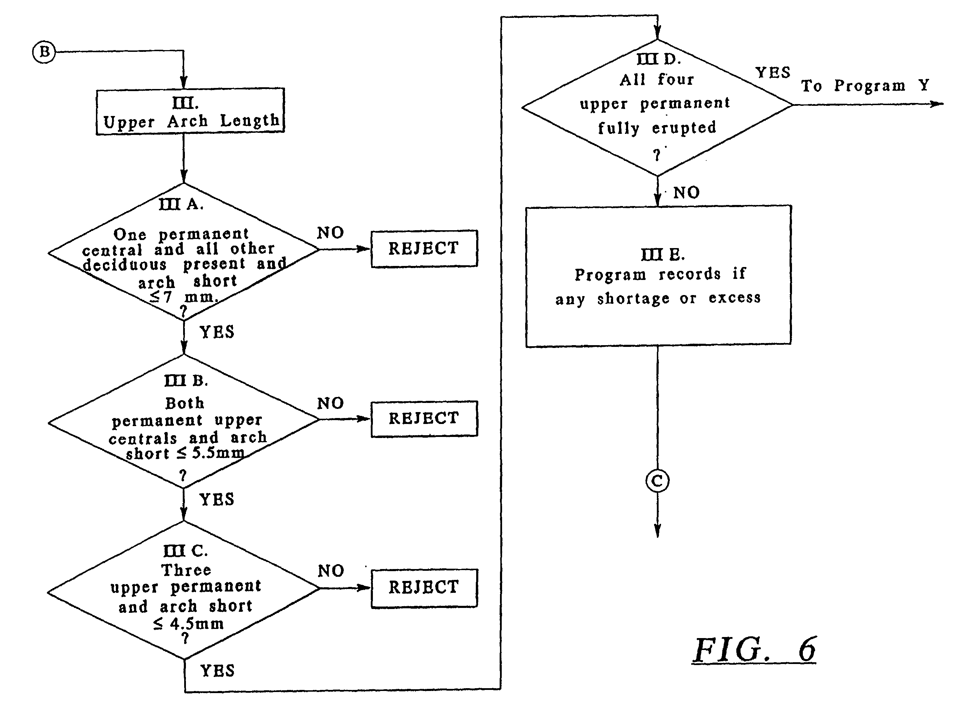

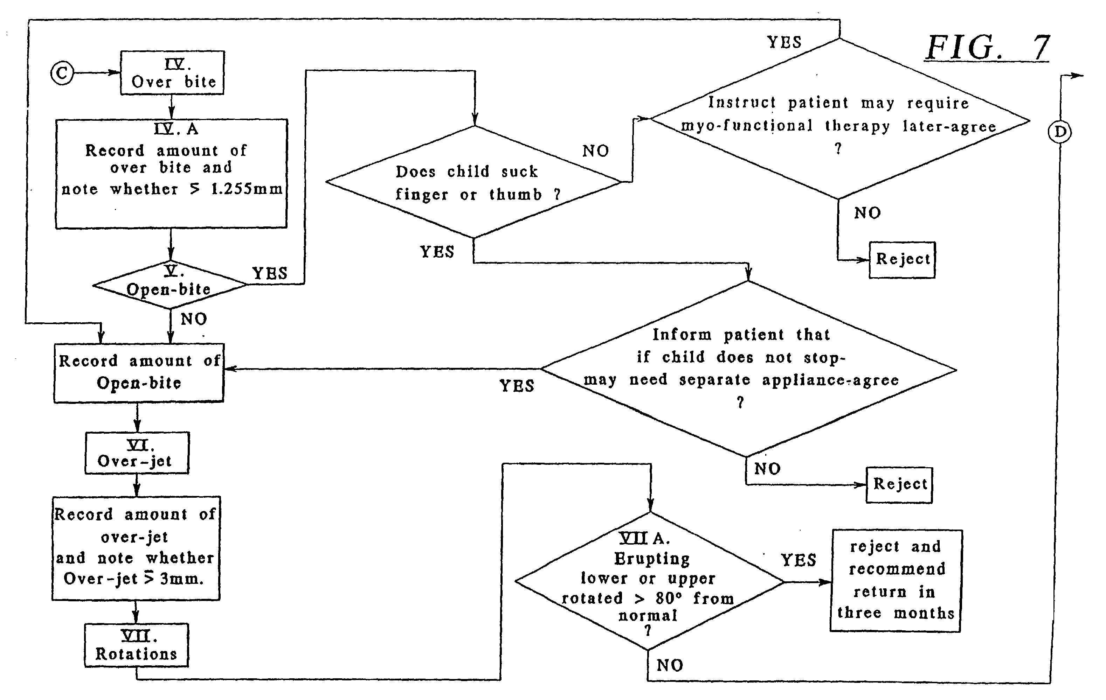

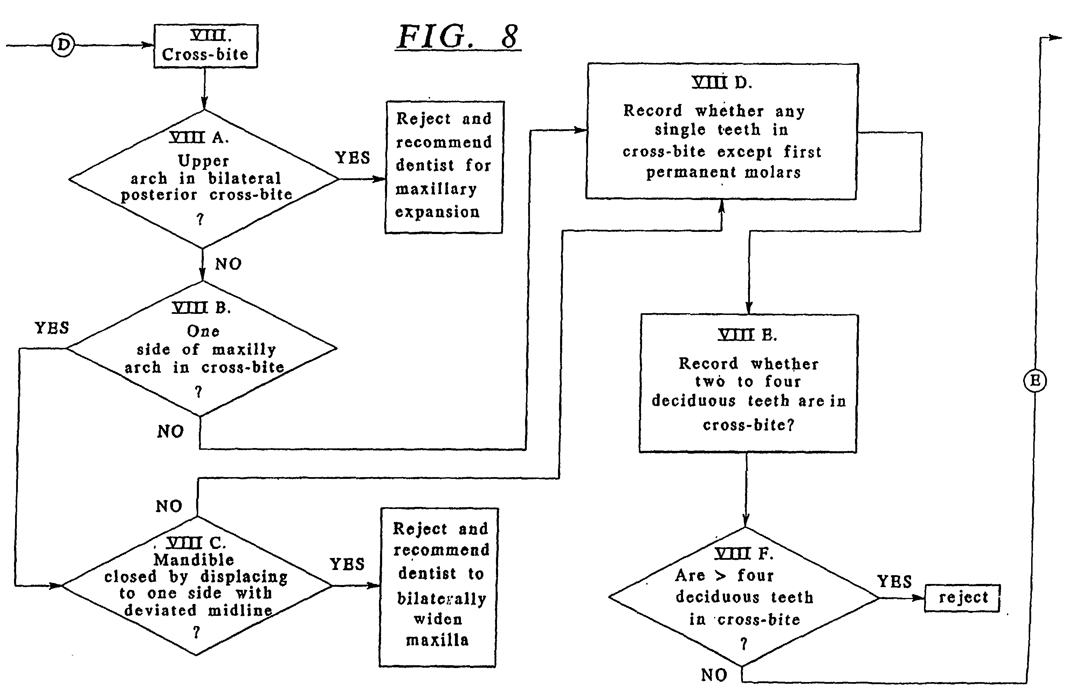

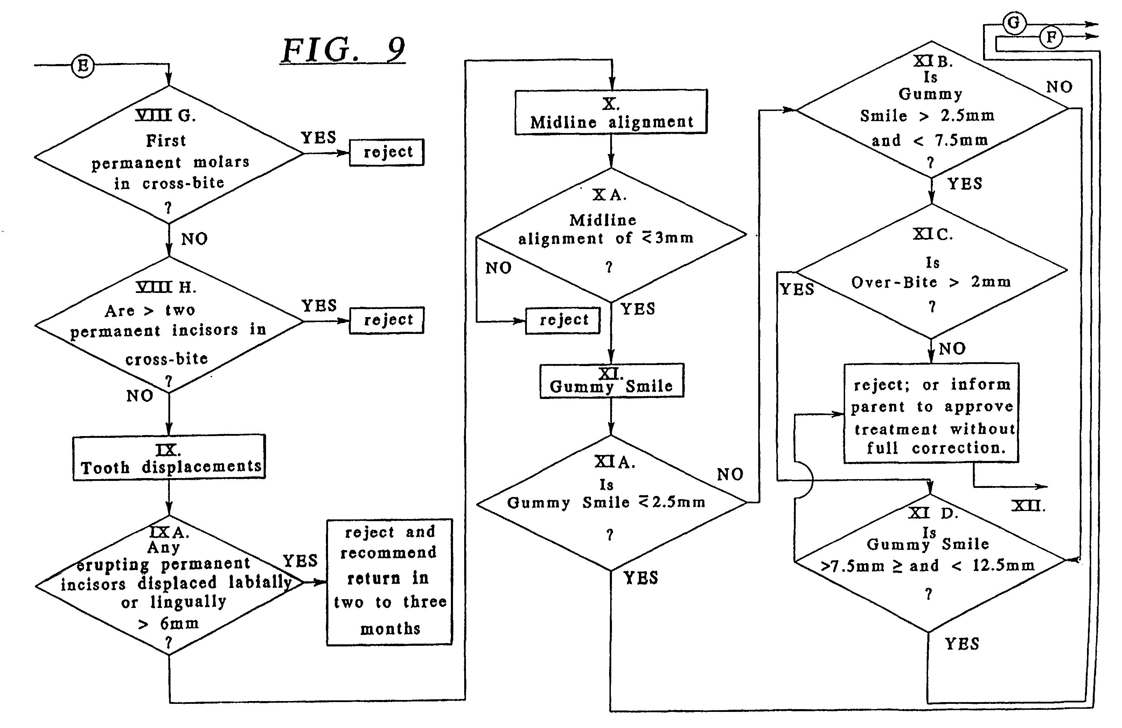

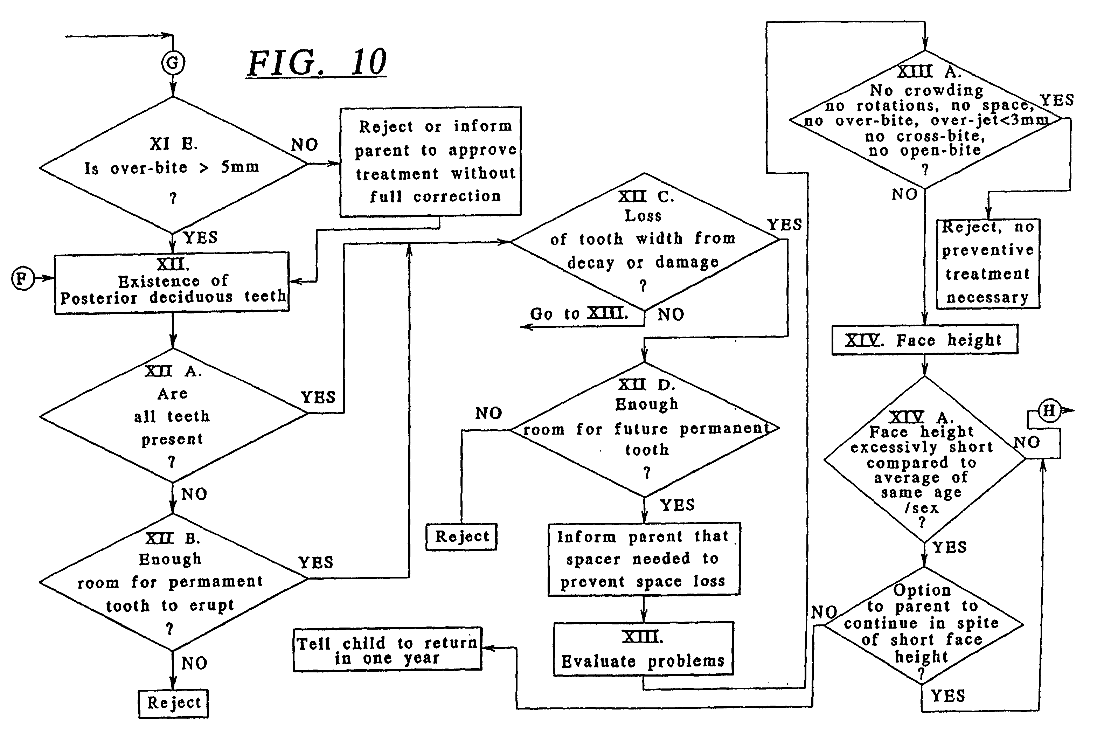

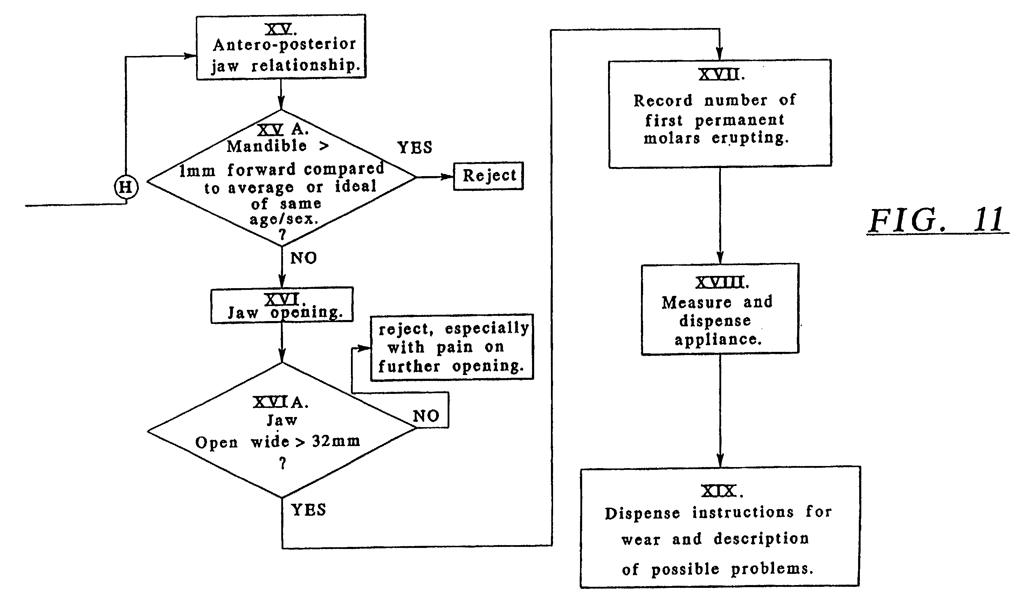

FIGS. 4-11 are a flowchart diagram of the diagnosis procedure followed by the apparatus for individuals in the age range of about 5-8 year olds.

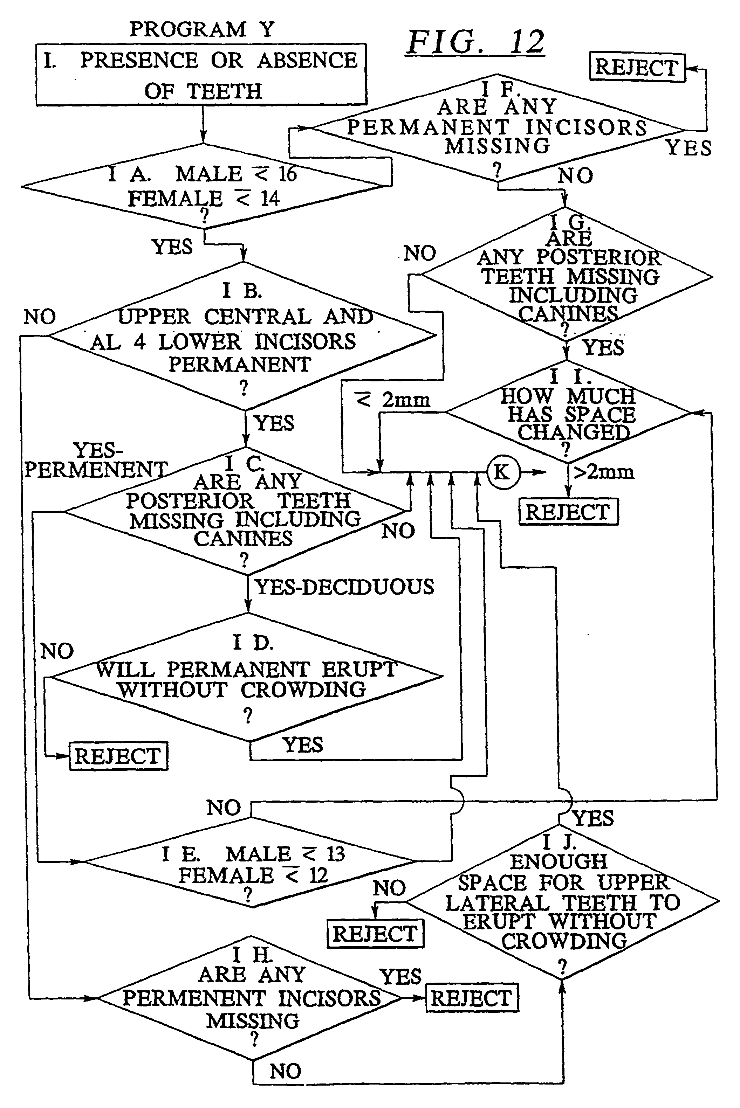

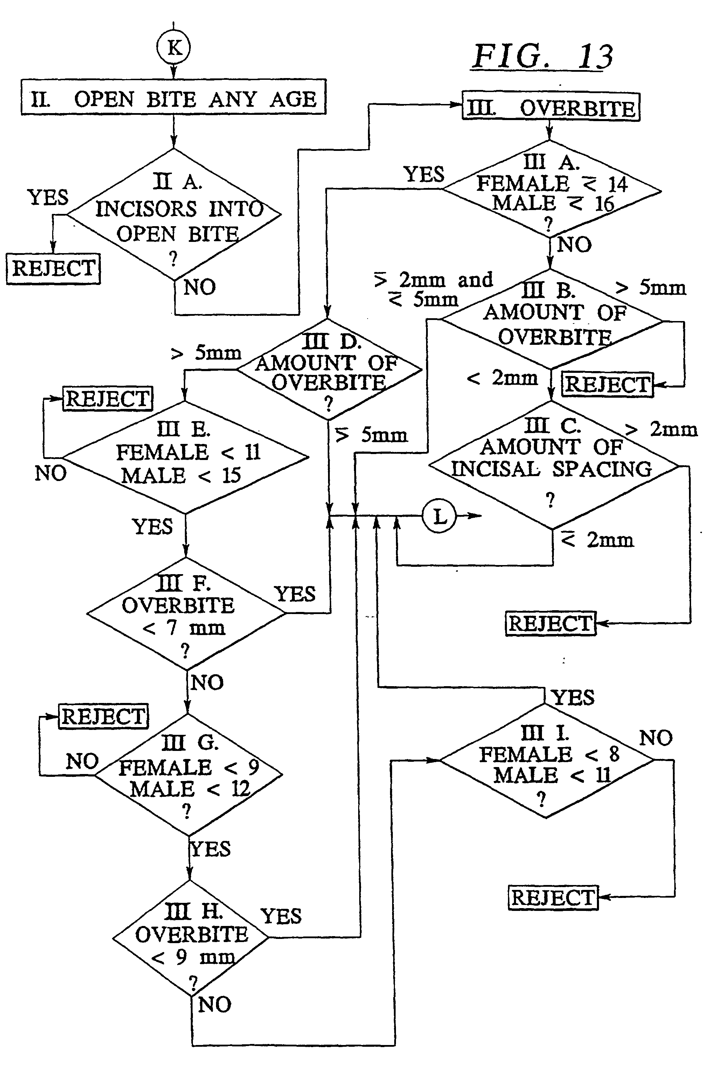

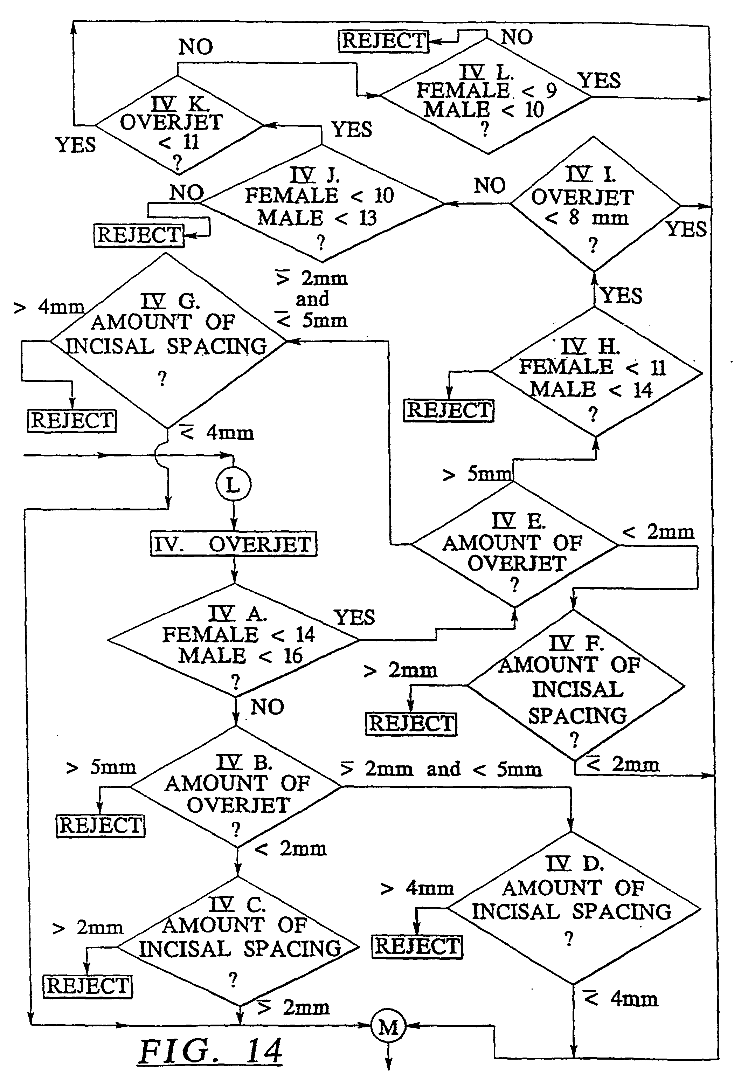

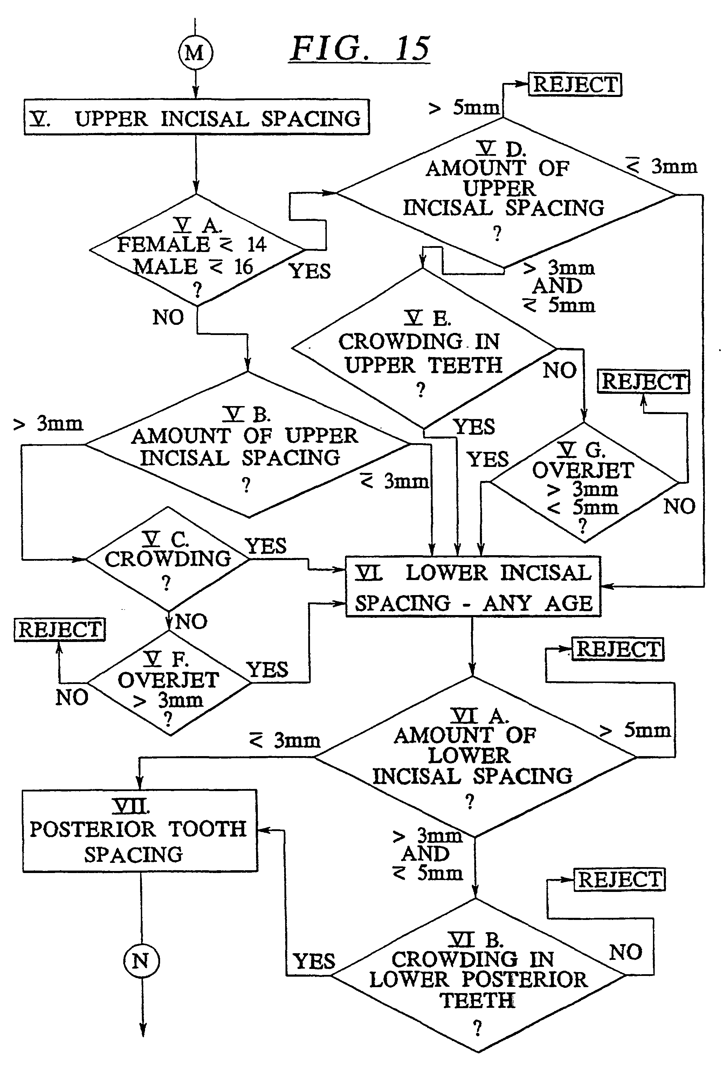

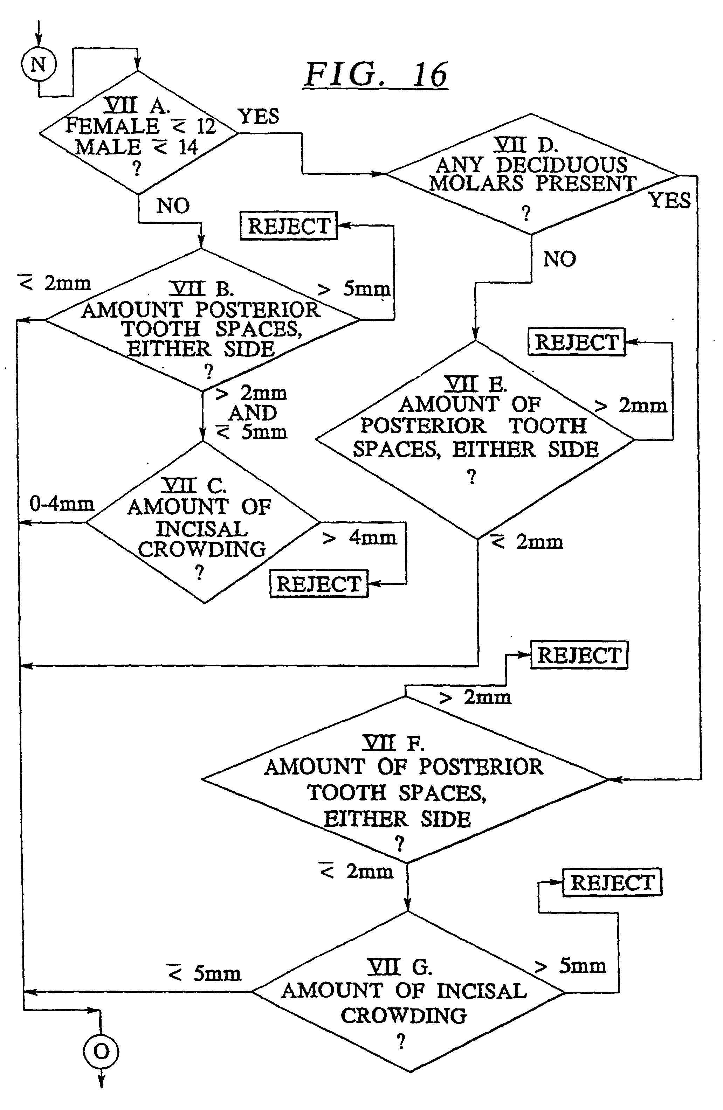

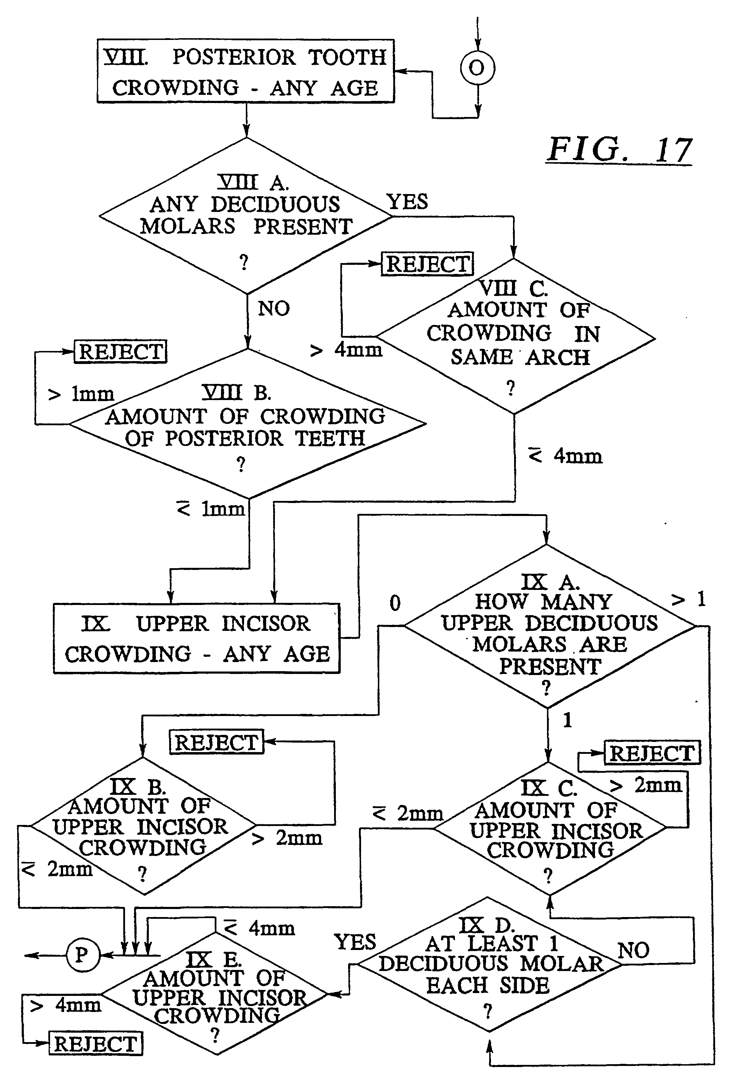

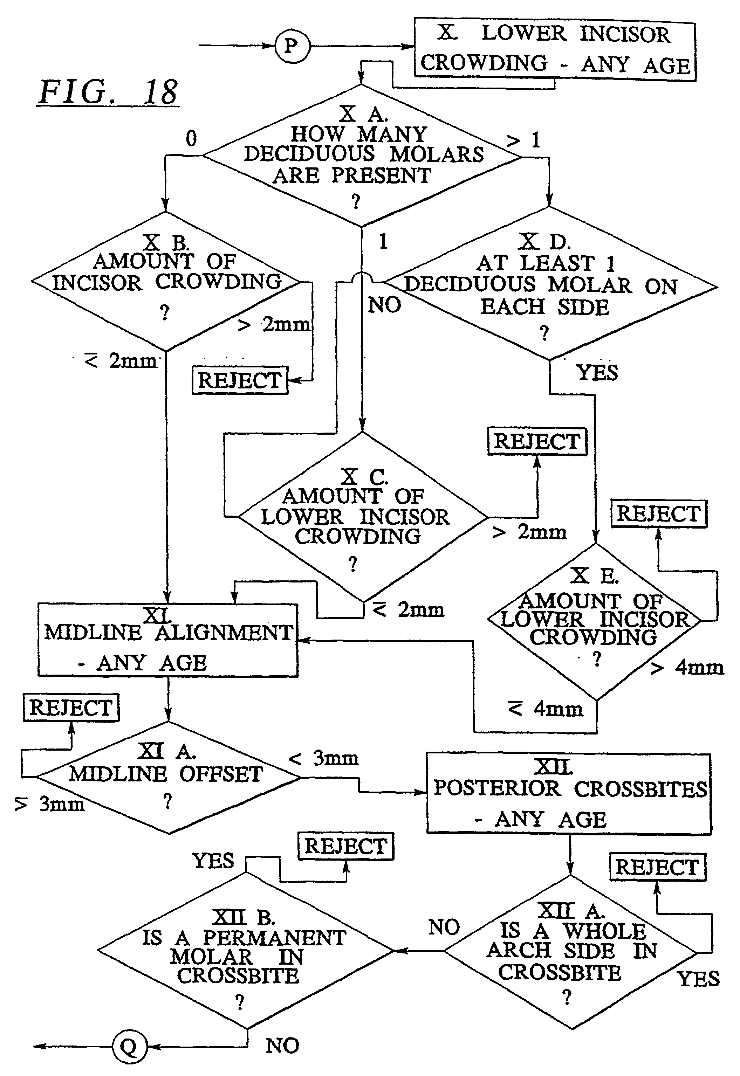

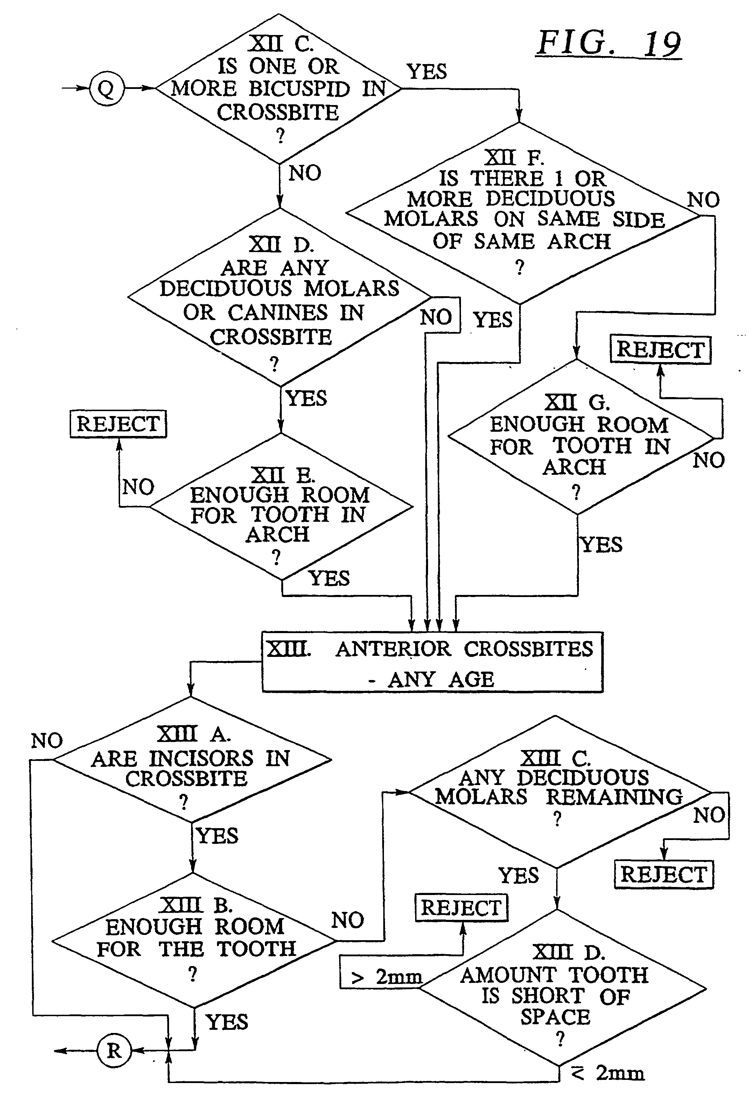

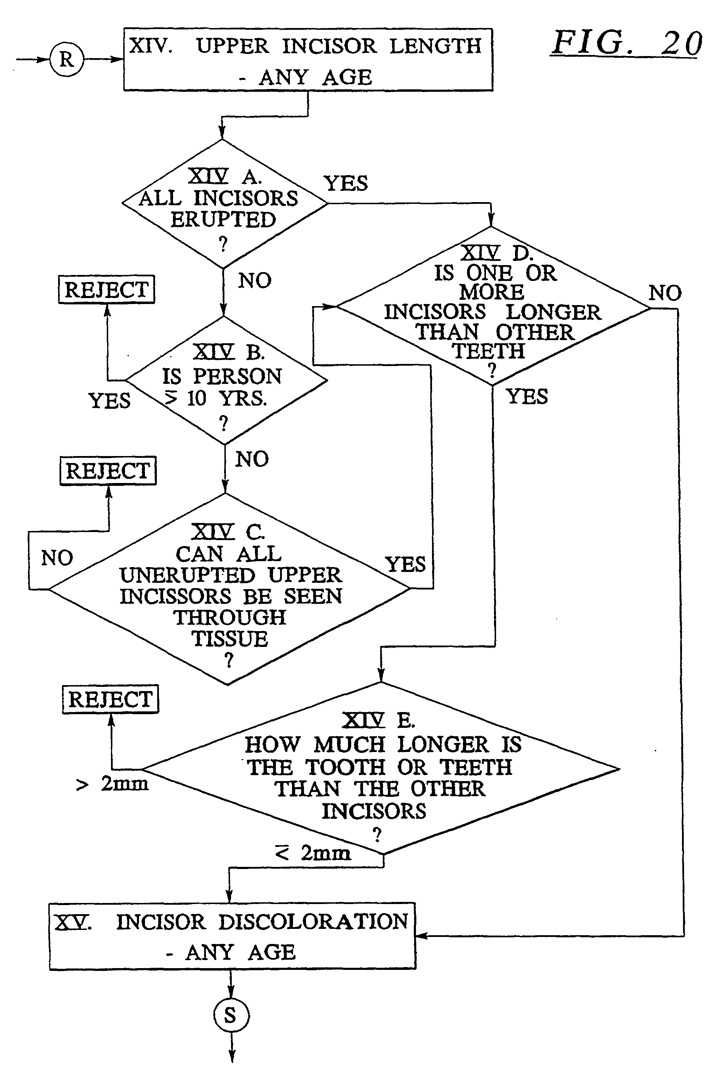

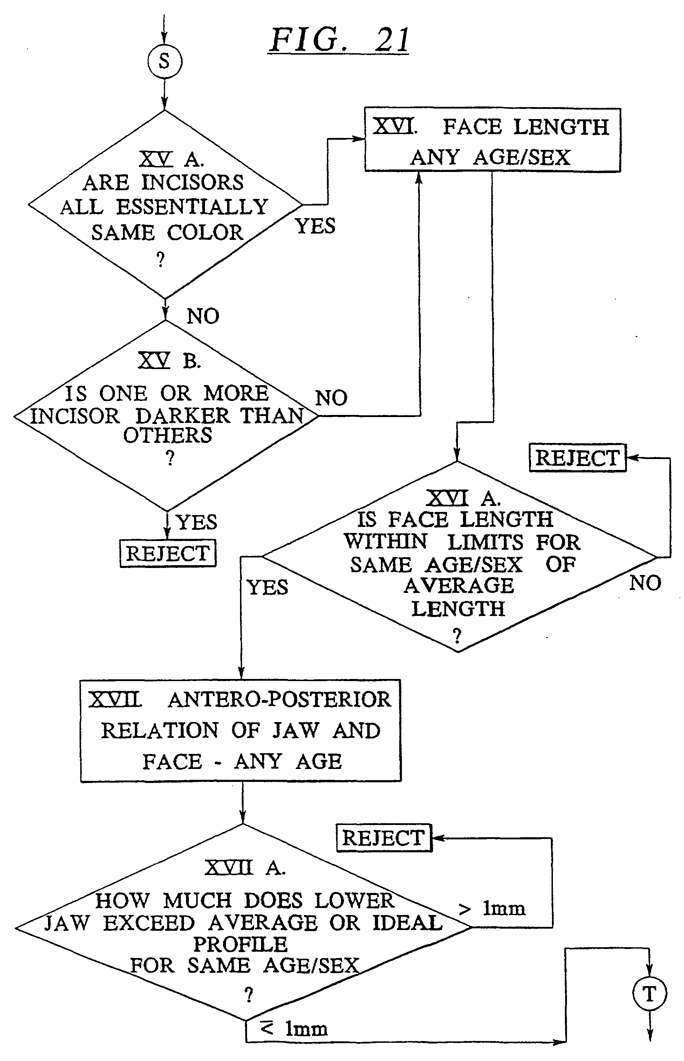

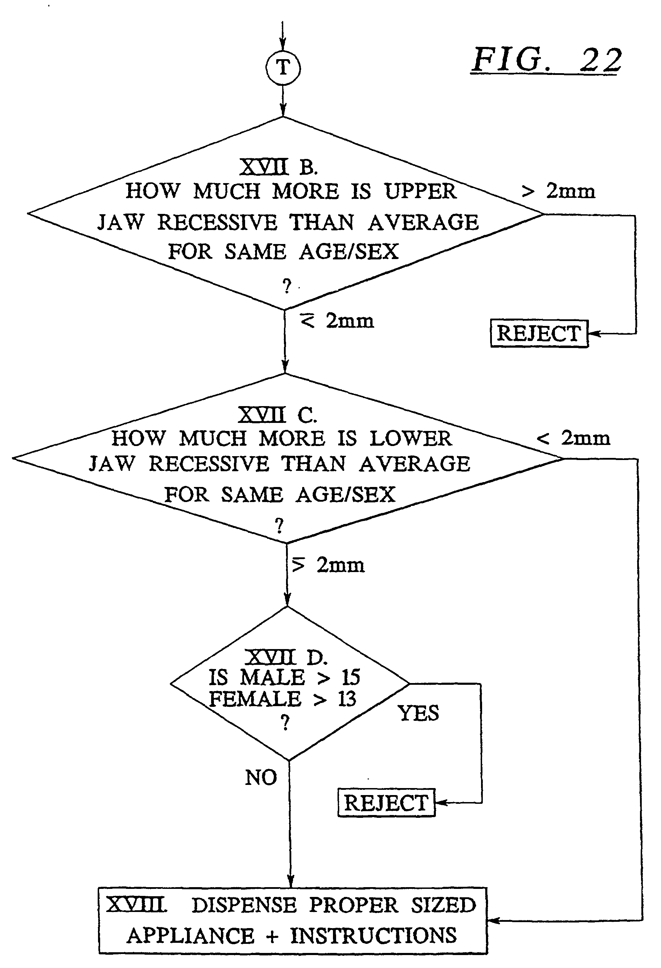

FIGS. 12-22 are a flow chart diagram of the diagnosis procedure for individuals in the age range of about 7 years old and up.

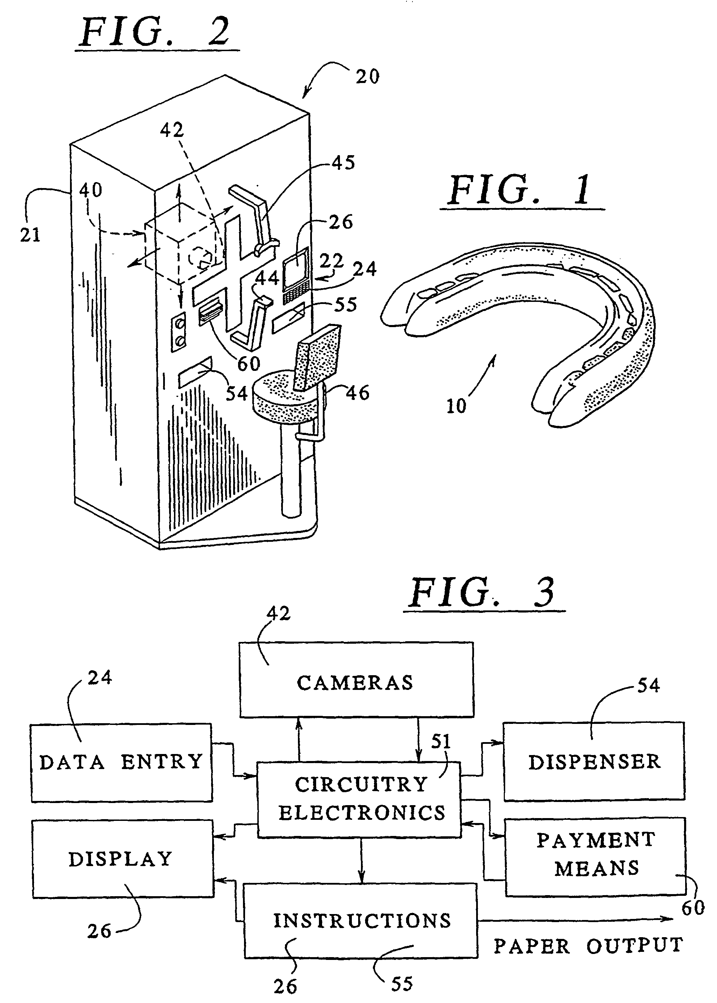

FIG. 1 illustrates an orthodontic appliance 10, the details of which are disclosed in many of my prior patents, including exemplary U.S. Patent Nos. 3,898,736; 3,939,598; 4,073,061; and 5,037,295. Such appliances are produced in various standardized sizes depending upon a particular individual's tooth size, tooth spacing, and tooth alignment conditions. They are also supplied in various styles depending on the number of posterior teeth present in the mouth. They are generally designed to fit 5 to 7 year olds, 8 to 12 year olds, and adults. Each type has several graduated sizes to fit the majority of any population. The present invention is directed to an apparatus for diagnosing particular patients' orthodontic requirements, selecting the proper appliance and size for correcting the orthodontic conditions, and dispensing the selected appliance.

FIG. 2 illustrates a generic view of an apparatus 20 constructed in accordance with one embodiment of the present invention. The apparatus includes an outer protective housing 21, which may take on any number of configurations and constructions but is of a relatively sturdy and secure construction to prevent theft from or tampering with the apparatus. For example, the housing 21 may be of a steel construction welded or bolted together to enclose the remaining components of the apparatus within the housing.

A user interface 22 is located on one exterior surface of the housing 21 for manipulation by a user of the apparatus 20. The user interface 22 includes a data entry surface 24 through which a user may input information necessary for properly operating the apparatus. The user interface 22 may also include a display 26 such as an LED or LCD display for relaying information from the apparatus to the user. The data entry surface 24 may include a plurality of lettered and numbered input keys for manual data entry, or may be a touch screen or other suitable construction.

The apparatus 20 also includes diagnosis hardware 40 disposed within housing 21. The hardware 40 is adapted to collect data from the user's mouth and transmit the data to the internal electronics of the apparatus 20. In one embodiment, the diagnosis hardware 40 includes a video or digital still camera 42 mounted to the housing 21 for taking a series of video images or photographs of the users face and mouth. The camera 42 is preferably hard wired to the internal electronics of the apparatus 20 for transmitting the video image information thereto for diagnosing the particular user's orthodontic needs.

A chin support member 44 and a forehead rest 45 is positioned adjacent the camera 42 on the housing 21 for properly positioning and holding stationary the patient's head during use of the apparatus 20 for obtaining an accurate diagnosis. The housing 21 may also include a seat 46 on which a user may rest while undergoing the diagnosis.

It is necessary that the camera 42 acquire various still digital images from several angles or various continuous video digital images of the individuals' face and teeth. The images must include occlusal views as well as labial and buccal surface views of the teeth. It is preferred that the images taken also enable the apparatus to determine facial symmetry, facial length, profile and lip contour, chin and nose contour and potentially other necessary aspects of the individuals' face and mesio-distal widths of the incisors for providing a proper and complete diagnosis.

In one embodiment, the apparatus 20 may provide, or a supply may be placed nearby, a special calibrated paper, which the user moistens and then places on the upper front teeth. This can enable the apparatus 20 to calculate the proper appliance size. In another embodiment, the automatic focus on the digital camera can calculate the size of teeth without this calibrated paper.

The apparatus 20 also includes a storage chamber (not shown) within the housing 21 for holding an adequate supply of prefabricated appliances 10 in the various sizes. The apparatus 20 may further include a dispensing mechanism (not shown) and a dispensing slot 54 in the housing 21 for delivering the appropriate appliance to the user.

In another embodiment, the apparatus 20 of the invention may merely be used for diagnosing the orthodontic needs and requirements of individuals and therefore will not include a storage chamber filled with appliances 10 nor a dispensing mechanism or slot 54.

In another embodiment, the apparatus 20 also incorporates a payment device 60 accessible by the user on the housing 21. The payment device 60 may take on a number of different constructions and configurations without departing from the scope of the present invention. The payment device 60 is preferably adapted to receive a credit or debit card having a magnetic strip as is known in the art.

FIG. 3 illustrates a simplified schematic for the electronics of the apparatus 20. An individual inputs information into the user interface 22. The interface may include a Keyboard 24, which transmits the data to the pre-programmed circuitry and electronics 51. The electronics 51 will further transmit data and instructions to the display 26 of the user interface 22 for communicating with the individual, once all the necessary information has been provided by the individual. Thus, electronics 51 transmits information to the cameras 42 for taking the various digital images of the individuals' mouth, teeth and face. If necessary, the electronics may continually ask questions or instruct the individual how to move in order to acquire all of the proper video images.

The cameras 42 then transmit the digital signals representing the images taken from the mouth and face to the pre-programmed electronics 51. The electronics perform the necessary calculations and diagnosis based upon the digital images, pre-programmed information and information input by the individual. Once the diagnosis is complete, the electronics instruct the patient whether they are a candidate for the treatment with the appliance or are rejected. Instructions for use are delivered via either a hard copy such as a paper output 55 or via the user display 26. The electronics also transmit a signal to dispense the appropriate appliance through slot 54 and deduct the appropriate cost from the debit card or charge the fee via a credit card.

As will be evident to those skilled in the art, FIG. 3 is a very basic schematic of how the various components and sections of apparatus 20 are associated with one another. The particular construction and configuration of the apparatus structure, hardware and software for the diagnosis of the orthodontic problem and for the operation of apparatus 20 may vary considerably without departing from the scope of the present invention.

Two sections of the computerized orthodontic diagnostic software are used: the first is to diagnose children from about 5 to 8 years of age, depending if the permanent lower and some of the upper permanent incisors are fully erupted or not; and the second is to diagnose individuals from about 7 or 8 years into adulthood involving those where most of the permanent upper and lower incisors are fully erupted.

Prior to embarking on the diagnostic analysis of the patient, the apparatus is programmed to ask and receive certain information from the patient and to dispense information to the patient prior to diagnosis regarding the pitfalls and limitations of this form of diagnosis and treatment. The apparatus may be programmed to proceed with the diagnosis and dispensing of an appliance only upon acceptance by an adult. As the diagnosis proceeds, certain questions of approval may be asked if the parent wishes to proceed or not depending on certain questionable diagnostic information obtained from the digital images. Certain information might be given to the individual as to such things as possible decay or loss of arch length and recommendations given to have these things taken care of first and to return when this is done. The apparatus can even refer the individual to a dentist in the area for help if this is needed.

Parameters of accepted dimensions such as face height, jaw relations, degree of overbite, overjet or crowding as related to sex and age, and measure of deciduous molars will be used in the software to aid in the proper diagnosis and acceptability of the patient for treatment and to determine estimated length of treatment, degree of success, and length of retention.

While a preformed embodiment has been shown and described, modifications, changes or additions to diagnostic principles and other changes in the efficiency and completeness to the diagnostics and the program may be apparent to those skilled in the art which fall within the scope of the invention. It is also possible that single size or one size fits all appliances are dispensed in the same manner as described. It is intended that such modifications and changes be covered by the appended claims.

## Claims

1. An apparatus (20) for diagnosing orthodontic conditions in a mouth of an individual, the apparatus (20) comprising an outer case (21); a user interface (22) disposed on the outer case (21) adapted to provide information to the individual and to receive information from the individual; diagnostic hardware (40) positioned within the outer case (21) including at least one digital camera (42) adapted to take images of the individuals' teeth and mouth from a plurality of angles; electronic circuitry pre-programmed with statistical data representing sample orthodontic conditions for comparison to actual data collected by the diagnostic hardware (40) representing the orthodontic conditions of the individual and transmitted to said electronic circuitry, and further adapted to diagnose whether the orthodontic conditions of the individual are correctable; **characterized in that** it comprises means for dispensing instructions via the user interface (22) to the individual to inform of the results of the diagnosis and to instruct how to correct the orthodontic conditions.

2. The apparatus according to claim 1, wherein at least one digital camera is mounted to the outer case and is movable to pre-programmed positions relative to the outer case to take the plurality of images.

3. The apparatus according to claim 1, wherein the at least one digital camera is stationary relative to the outer case and the individual moves to acquire the plurality of angles.

4. The apparatus according to claim 1, wherein the user interface comprises a display screen for providing information to the individual.

5. The apparatus according to claim 1, wherein the user interface comprises a keypad disposed on the outer case for receiving information from the individual.

6. The apparatus according to claim 5, wherein the user interface further comprises a display screen disposed in the outer case to display information for the individual.

7. The apparatus according to claim 4, wherein the display screen is a touch screen adapted for providing information to the individual and for receiving information from the individual.

8. The apparatus according to claim 1, wherein the statistical data represents a plurality of orthodontic conditions from a cross-section of individuals of various age, sex and orthodontic conditions.

9. The apparatus according to claim 1, wherein the statistical data represents upper and lower limits for each of a plurality or orthodontic conditions diagnosed by the apparatus.

10. The apparatus according to claim 1, wherein the statistical data comprises actual digital models representing a plurality of orthodontic conditions from a cross-section of individuals of various age, sex and orthodontic conditions.

11. The apparatus according to claim 1, further comprising an appliance storage chamber disposed within the outer case storing therein a plurality of pre-fabricated orthodontic corrective appliances of various sizes.

12. The apparatus according to claim 11, further comprising an appliance dispenser adapted to select one of the pre-fabricated orthodontic corrective appliances based upon the diagnosed orthodontic condition of the individual and to dispense the selected pre-fabricated appliance to the individual.

13. The apparatus according to claim 1. further comprising an appliance storage chamber disposed within the outer case storing therein a plurality of one-size fits all appliances, and a dispenser adapted to dispense the appliances.

14. The apparatus according to claim 1, further comprising a payment device carried on the outer case for receiving payment information from the individual.

15. The apparatus according to claim 14, wherein the payment device comprises a magnetic stripe reader for reading a payment card carrying thereon a magnetic stripe.

16. The apparatus according to claim 15, wherein the electronic circuitry is further pre-programmed to receive the payment information from the magnetic stripe reader and further adapted to communicate with the user interface for providing payment information to the individual.

17. The apparatus according to claim 15, wherein the payment device is adapted to credit payment from a credit card having thereon a magnetic stripe.

18. The apparatus according to claim 15, wherein the payment device is adapted to credit payment from a debit card having thereon a magnetic stripe.

19. The apparatus according to claim 1, wherein the electronic circuitry is pre-programmed to diagnose at least orthodontic conditions of the individual such as presence or absence of permanent teeth, presence or absence of deciduous teeth, overbite, overjet, cross-bite, open-bite, gummy smile, tooth crowding, tooth rotation and tooth spacing.

20. The apparatus according to claim 19, wherein the electronic circuitry is pre-programmed to compare the statistical information for each of the orthodontic conditions relative to the actual orthodontic condition of each of the orthodontic conditions of the individual.

21. The apparatus according to claim 1, further comprising an adjustable seat carried on the outer case permitting the individual to sit so that the mouth and teeth of the individual is properly positioned relative to the diagnostic hardware.

22. The apparatus according to claim 1, further comprising a support carried on the outer case for properly positioning the mouth and teeth of the individual relative to the diagnostic hardware.

23. The apparatus according to claim 22, wherein the support comprises a chin rest and a forehead rest.

## Patentansprüche

1. Vorrichtung (20) zur Diagnose kieferorthopädischer Zustände im Mund einer Person, wobei die Vorrichtung (20) ein äußeres Gehäuse (21), eine auf dem äußeren Gehäuse (21) angeordnete Bedienoberfläche (22), die dazu dient, Informationen an die Person zu liefern und Informationen von der Person zu empfangen, im äußeren Gehäuse (21) angeordnete Diagnosehardware (40) einschließlich mindestens einer Digitalkamera (42), die dazu dient, aus einer Vielzahl von Winkeln Bilder von den Zähnen und dem Mund der Person aufzunehmen, einen elektronischen Schaltkreis, der mit statistischen Daten vorprogrammiert ist, die zum Vergleich mit den von der Diagnosehardware (40) erfassten tatsächlichen Daten, die die kieferorthopädischen Zustände der Person darstellen und zu diesem elektronischen Schaltkreis übermittelt werden, kieferorthopädische Musterzustände darstellen, umfasst, und die weiterhin dazu dient, per Diagnose festzustellen, ob die kieferorthopädischen Zustände der Person korrigiert werden können,
**dadurch gekennzeichnet,**
**dass** sie Mittel umfasst, mit denen über die Bedienoberfläche (22) Anweisungen an die Person ausgegeben werden können, um diese über die Ergebnisse der Diagnose zu informieren und sie anzuweisen, wie die kieferorthopädischen Zustände korrigiert werden können.

2. Vorrichtung nach Anspruch 1, wobei mindestens eine Digitalkamera an dem äußeren Gehäuse montiert ist und bezüglich des äußeren Gehäuses zu vorprogrammierten Positionen gefahren werden kann, damit die Vielzahl der Bilder aufgenommen werden kann.

3. Vorrichtung nach Anspruch 1, wobei die mindestens eine Digitalkamera bezüglich des äußeren Gehäuses stationär angebracht ist und sich die Person bewegt, damit die Vielzahl der Winkel erreicht wird.

4. Vorrichtung nach Anspruch 1, wobei die Bedienoberfläche einen Anzeigebildschirm zur Übermittlung von Informationen an die Person umfasst.

5. Vorrichtung nach Anspruch 1, wobei die Bedienoberfläche eine auf dem äußeren Gehäuse angeordnete Tastatur umfasst, die für den Empfang von Informationen von der Person bestimmt ist.

6. Vorrichtung nach Anspruch 5, wobei die Bedienoberfläche weiterhin einen in dem äußeren Gehäuse angeordneten Anzeigebildschirm umfasst, über den der Person Informationen angezeigt werden.

7. Vorrichtung nach Anspruch 4, wobei der Anzeigebildschirm ein Berührungsbildschirm ist, der dazu dient, der Person Informationen zu übermitteln und Informationen von der Person zu empfangen.

8. Vorrichtung nach Anspruch 1, wobei die statistischen Daten eine Vielzahl von kieferorthopädischen Zuständen aus einem Querschnitt von Personen unterschiedlichen Alters und Geschlechts sowie unterschiedlicher kieferorthopädischer Zustände darstellen.

9. Vorrichtung nach Anspruch 1, wobei die statistischen Daten obere und untere Grenzwerte für jeden der vielen kieferorthopädischen Zustände darstellen, die von der Vorrichtung diagnostiziert werden.

10. Vorrichtung nach Anspruch 1, wobei die statistischen Daten tatsächliche Digitalmodelle umfassen, die eine Vielzahl von kieferorthopädischen Zuständen aus einem Querschnitt von Personen unterschiedlichen Alters und Geschlechts sowie unterschiedlicher kieferorthopädischer Zustände darstellen.

11. Vorrichtung nach Anspruch 1, die weiterhin eine in dem äußeren Gehäuse angeordnete Geräteaufbewahrungskammer umfasst, in der eine Vielzahl von vorgefertigten für kieferorthopädische Korrekturen bestimmten Geräten unterschiedlicher Größe aufbewahrt werden.

12. Vorrichtung nach Anspruch 11, die weiterhin einen Gerätespender umfasst, der dazu bestimmt ist, eines der vorgefertigten für kieferorthopädische Korrekturen bestimmten Geräte auf der Grundlage des diagnostizierten kieferorthopädischen Zustands der Person auszuwählen und das ausgewählte vorgefertigte Gerät an die Person auszugeben.

13. Vorrichtung nach Anspruch 1, die weiterhin eine in dem äußeren Gehäuse angeordnete Geräteaufbewahrungskammer, in der eine Vielzahl von allgemein passenden Geräten einer Größe aufbewahrt werden, sowie einen Spender für die Ausgabe der Geräte umfasst.

14. Vorrichtung nach Anspruch 1, die weiterhin eine auf dem äußeren Gehäuse angebrachte Zahlungseinrichtung umfasst, mit der Zahlungsinformationen von der Person empfangen werden.

15. Vorrichtung nach Anspruch 14, wobei die Zahlungseinrichtung ein Magnetstreifenlesegerät umfasst, das eine mit einem Magnetstreifen versehene Zahlungskarte ausliest.

16. Vorrichtung nach Anspruch 15, wobei der elektronische Schaltkreis weiterhin so vorprogrammiert ist, dass er die Zahlungsinformationen von dem Magnetstreifenlesegerät empfängt, und weiterhin dazu dient, Daten mit der Bedienoberfläche auszutauschen, damit der Person Zahlungsinformationen übermittelt werden.

17. Vorrichtung nach Anspruch 15, wobei die Zahlungseinrichtung dazu dient, eine über eine mit einem Magnetstreifen versehene Kreditkarte getätigte Zahlung gutzuschreiben.

18. Vorrichtung nach Anspruch 15, wobei die Zahlungseinrichtung dazu dient, eine über eine mit einem Magnetstreifen versehene Lastschriftkarte getätigte Zahlung gutzuschreiben.

19. Vorrichtung nach Anspruch 1, wobei der elektronische Schaltkreis so vorprogrammiert ist, dass zumindest kieferorthopädische Zustände der Person diagnostiziert werden, wie zum Beispiel das Vorhandensein oder Nicht-Vorhandensein bleibender Zähne, das Vorhandensein oder Nicht-Vorhandensein von Milchzähnen, Überbiss, horizontaler Überbiss, Kreuzbiss, offener Biss, Gingivalächeln, Engstand der Zähne, Zahndrehung und Zahnlücken.

20. Vorrichtung nach Anspruch 19, wobei der elektronische Schaltkreis so vorprogrammiert ist, dass ein Vergleich der statistischen Informationen zu jedem der kieferorthopädischen Zustände mit dem tatsächlichen kieferorthopädischen Zustand jedes kieferorthopädischen Zustandes der Person stattfindet.

21. Vorrichtung nach Anspruch 1, die weiterhin einen an dem äußeren Gehäuse angebrachten verstellbaren Sitz umfasst, auf dem die Person so Platz nehmen kann, dass sich Mund und Zähne der Person in der richtigen Position relativ zur Diagnosehardware befinden.

22. Vorrichtung nach Anspruch 1, die weiterhin eine an dem äußeren Gehäuse angebrachte Abstützung umfasst, damit sich Mund und Zähne der Person in der richtigen Position in Bezug auf die Diagnosehardware befinden.

23. Vorrichtung nach Anspruch 22, wobei die Abstützung eine Kinnablage und eine Stirnablage umfasst.

## Revendications

1. Appareil (20) pour le diagnostic des conditions orthodontiques, dans une bouche d'un individu, l'appareil (20) comprenant un boîtier externe (21), une interface utilisateur (22) agencée sur le boîtier externe (21) adaptée pour fournir des informations à l'individu et pour en recevoir des informations ; le matériel de diagnostic (40) positionné dans le boîtier externe (21), comprenant au moins une caméra digitale (42) adaptée pour prendre des clichés des dents et de la bouche de l'individu sous une multitude d'angles ; un circuit électronique préprogrammé avec des données statistiques représentant les conditions orthodontiques de référence pour la comparaison avec des données actuelles collectées par le matériel diagnostique (40), représentant les conditions orthodontiques de l'individu et transmises au dit circuit électronique, et, en plus, adapté pour diagnostiquer si les conditions orthodontiques de l'individu peuvent être corrigées; **caractérisé en ce qu'**il comprend un moyen pour dispenser des instructions par l'interface utilisateur (22) à l'individu afin de l'informer des résultats du diagnostic et de l'instruire sur la façon de corriger les conditions orthodontiques.

2. Appareil selon la revendication 1, dans lequel au moins une caméra digitale est montée sur le boîtier externe et est amovible pour des parties préprogrammées par rapport au boîtier externe pour prendre une multitude de clichés.

3. Appareil selon la revendication 1, dans lequel au moins une caméra digitale est stationnaire par rapport au boîtier externe et l'individu se déplace pour acquérir la multitude d'angles.

4. Appareil selon la revendication 1, dans lequel l'interface utilisateur comprend un écran d'affichage pour fournir des informations à l'individu.

5. Appareil selon la revendication 1, dans lequel l'interface utilisateur comprend un clavier disposé sur le boîtier externe pour recevoir les informations de l'individu.

6. Appareil selon la revendication 5, dans lequel l'interface utilisateur comprend en outre un écran d'affichage disposé dans le boîtier externe pour afficher des informations pour l'individu.

7. Appareil selon la revendication 4, dans lequel l'écran d'affichage est un écran à touches adapté pour fournir des informations à l'individu et pour recevoir des informations de la part de cet individu.

8. Appareil selon la revendication 1, dans lequel les données statistiques représentent une multitude de conditions orthodontiques à partir d'une coupe transversale d'individus d'âge, sexe et conditions orthodontiques différents.

9. Appareil selon la revendication 1, dans lequel les données statistiques représentent des limites inférieure et supérieure pour chacune des multitudes conditions orthodontiques diagnostiquées par l'appareil.

10. Appareil selon la revendication 1, dans lequel les données statistiques comprennent des modèles numériques actuels représentant une multitude de conditions orthodontiques à partir d'une coupe transversale d'individus d'âge, sexe et conditions orthodontiques différents.

11. Appareil selon la revendication 1, comprenant en outre une chambre de stockage d'applications agencée dans le boîtier externe stockant ici une multitude d'applications correctives orthodontiques préfabriquées de différentes tailles.

12. Appareil selon la revendication 11, comprenant en outre un dispensateur d'application adapté pour sélectionner une des applications correctives orthodontiques préfabriquées reposant sur la condition orthodontique diagnostiquée chez l'individu et pour dispenser l'application préfabriquée sélectionnée à l'individu.

13. Appareil selon la revendication 1, comprenant en outre une chambre de stockage d'applications disposée au sein du boîtier externe stockant ici une multitude de taille unique correspondant à toutes les applications, et un système d'administration adapté pour dispenser les applications.

14. Appareil selon la revendication 1, comprenant en outre un dispositif de paiement réalisé sur le boîtier externe pour recevoir des informations de paiement de la part de l'individu.

15. Appareil selon la revendication 14, dans lequel le dispositif de paiement comprend un lecteur de bande magnétique pour lire une carte de paiement portant une bande magnétique.

16. Appareil selon la revendication 15, dans lequel le circuit électronique est en outre préprogrammé pour recevoir l'information de paiement depuis un lecteur de bande magnétique et en plus adapté pour communiquer avec l'interface utilisateur pour fournir des informations de paiement à l'individu.

17. Appareil selon la revendication 15, dans lequel le dispositif de paiement est adapté pour un paiement à crédit à partir d'une carte de crédit présentant une bande magnétique.

18. Appareil selon la revendication 15, dans lequel le dispositif de paiement est adapté pour un paiement à crédit à partir d'une carte de débit présentant une bande magnétique.

19. Appareil selon la revendication 1, dans lequel le circuit électronique est préprogrammé pour diagnostiquer au moins les conditions orthodontiques chez l'individu telles que la présence ou l'absence de dents permanentes, la présence et l'absence de dents déciduales, de surocclusion, de surplomb incisif, d'articulation croisée, de béance, de sourire gingival, de chevauchement des dents, de rotation des dents et des espace intradentaires.

20. Appareil selon la revendication 19, dans lequel le circuit électronique est préprogrammé pour comparer les informations statistiques pour chacune des conditions orthodontiques par rapport aux conditions orthodontiques actuelles de chacune des conditions orthodontiques de l'individu.

21. Appareil selon la revendication 1, comprenant en outre un siège ajustable reposant sur le boîtier externe permettant à l'individu de s'asseoir de sorte que la bouche et les dents de l'individu soient correctement positionnées sur le matériel de diagnostic.

22. Appareil selon la revendication 1, comprenant en outre un support réalisé sur le boîtier externe pour positionner correctement la bouche et les dents de l'individu par rapport relatif au matériel de diagnostic.

23. Appareil selon la revendication 22 dans lequel le support comprend un repose-menton et un repose-front.
